(19) Europäisches Patentamt
European Patent Office
Office européen des brevets

(11) EP 0 591 105 B1

(12) EUROPÄISCHE PATENTSCHRIFT

(45) Veröffentlichungstag und Bekanntmachung des Hinweises auf die Patenterteilung:
**24.10.2001 Patentblatt 2001/43**

(21) Anmeldenummer: **93810667.1**

(22) Anmeldetag: **21.09.1993**

(51) Int Cl.$^7$: **C09B 63/00**, C09B 33/02, C09B 55/00, C09B 56/02, C08K 5/16, C09B 35/03, C09B 35/031, C09B 35/033, C09B 35/02, C09B 69/04

# (54) Bisazo-, Bisazomethin- und Azo-azomethinverbindungen

Bisazo, bisazomethine and azo-azomethine compounds

Composés bisazoiques, bisazométhiniques et azo-azométhiniques

(84) Benannte Vertragsstaaten:
**CH DE FR GB IT LI**

(30) Priorität: **29.09.1992 CH 303392**

(43) Veröffentlichungstag der Anmeldung:
**06.04.1994 Patentblatt 1994/14**

(73) Patentinhaber: **Ciba Specialty Chemicals Holding Inc.**
**4057 Basel (CH)**

(72) Erfinder:
- **Hari, Stefan, Dr.**
  **CH-4153 Reinach (CH)**
- **Wallquist, Olof, Dr.**
  **CH-1723 Marly (CH)**

(56) Entgegenhaltungen:
**DE-A- 1 961 785**
**GB-A- 2 089 378**
**US-A- 3 227 550**
**US-A- 3 939 194**

- **DATABASE WPI Week 7610 Derwent Publications Ltd., London, GB; AN 76-18023X[10] & JP-A-51 009 122 (DAINIPPON INK CHEM KK) , 24.Januar 1976 & JP-B-58 038 467 23.August 1983 & JP-A-51 009 122 24.Januar 1976**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 591 105 B1

Printed by Jouve, 75001 PARIS (FR)

## Beschreibung

Die vorliegende Anmeldung betrifft Bisazo-, Bisazomethin- und Azo-azomethinverbindungen auf Basis von 1,4-Phenylendiaminsulfonsäuresalzen und ihre Verwendung zum Pigmentieren von hochmolekularem organischem Material.

Aus JP-A 76-9122 sind Bisazomethinpigmente auf Basis von 1,4-Phenylendiamin beschrieben, die sich dank ihrer hohen Hitzebeständikeit besonders gut zum Pigmentieren von Kunststoffen eignen. Ihre Lichtechtheit genügt allerdings nicht immer den heutigen Anforderungen der Technik.

Es ist nun gefunden worden, dass entsprechende Bisazo-, Bisazomethin- und Azo-azomethinverbindungen auf Basis von 1,4-Phenylendiaminsulfonssäuresalzen ohne Einbusse an anderen Eigenschaften eine ganz überraschend bessere Lichtbeständigkeit zeigen.

Die vorliegende Erfindung betrifft demnach Verbindungen der Formel

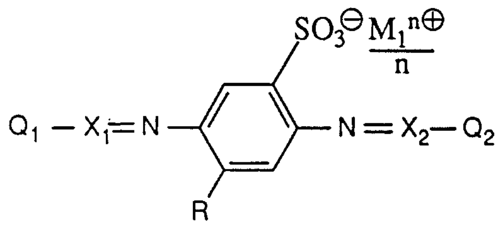

(I),

worin R Wasserstoff oder eine Gruppe

$$SO_3^{\ominus} \frac{M_2^{n\oplus}}{n}$$

bedeutet, $M_1$ und $M_2$ unabhängig voneinander ein Alkali- oder Erdalkalimetall oder Aluminium oder eine Gruppe der Formel

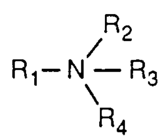

darstellen, wobei n die Zahl 1, 2 oder 3 ist und $R_1$, $R_2$, $R_3$ und $R_4$ Wasserstoff oder $C_1$-$C_8$-Alkyl bedeuten,
$X_1$ und $X_2$ unabhängig voneinander -N= oder -CH= sind,
$Q_1$ und $Q_2$ unabhängig voneinander Reste der Formel

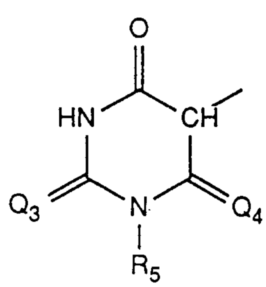 , 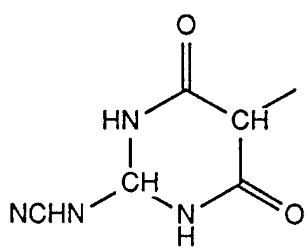 , 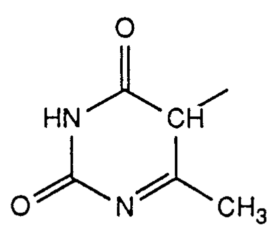 ,

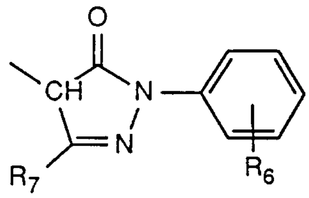, 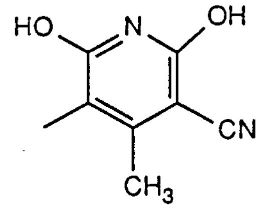, 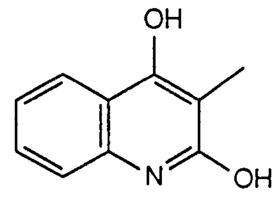,

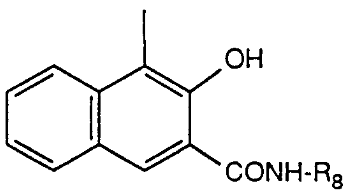, 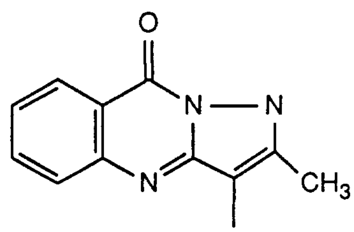

oder

$$CH_3COCHCONH\text{-}R_8$$

sind,
worin $Q_3$ O, S oder NH und $Q_4$ O oder NH bedeuten, $R_5$ Wasserstoff, $C_1$-$C_{12}$-Alkyl, unsubstituiertes oder durch $C_1$-$C_4$-Alkyl substituiertes Phenyl, $R_6$ Wasserstoff, $C_1$-$C_4$-Alkyl, $C_1$-$C_4$-Alkoxy oder

$$SO_3^{\ominus}\frac{M_3^{n\oplus}}{n},$$

worin $M_3$ unabhängig von $M_1$ und $M_2$ die gleiche

Bedeutung hat, $R_7$ OH, $C_1$-$C_4$-Alkyl oder $COOR_9$, worin $R_9$ $C_1$-$C_4$-Alkyl ist, und $R_8$ ein unsubstituiertes oder ein- oder zweimal durch Halogen, $C_1$-$C_4$-Alkyl, $C_1$-$C_4$-Alkoxy, $NO_2$ oder

$$COO^{\ominus}\frac{M_3^{n\oplus}}{n}$$

substituiertes Phenyl oder Naphthyl oder einen unsubstituierten oder durch $C_1$-$C_4$-Alkyl substituierten heterocyclischen Rest ausgewählt aus Pyrrolyl, Pyridyl, Pyrazinyl, Indolyl, Chinolyl, Benzimidazolyl, Benzoxazolyl, Phenmorpholyl, Chinazolyl oder Chinoxalyl bedeutet.

Bedeuten etwaige Substituenten $C_1$-$C_4$-Alkyl, so handelt es sich z.B. um Methyl, Ethyl, n-Propyl, Isopropyl, n-Butyl, sec.-Butyl oder tert.-Butyl; bei $C_1$-$C_8$-Alkyl handelt es sich zusätzlich z.B. um n-Amyl, tert.-Amyl, Hexyl, Heptyl, Octyl, 2-Ethylhexyl, und bei $C_1$-$C_{12}$-Alkyl zusätzlich z.B. um Nonyl, Decyl oder Dodecyl.

$R_6$, $R_{10}$ und $R_{11}$ bedeuten als $C_1$-$C_4$-Alkoxy z.B. Methoxy, Ethoxy, n-Propoxy, Isopropoxy oder Butyloxy.

Bedeuten $R_{10}$ und $R_{11}$ Halogen, dann handelt es sich z.B. um Jod, Fluor, insbesondere um Brom und bevorzugt um Chlor.

Von besonderer Bedeutung sind Verbindungen der Formel I, worin $X_1$ und $X_2$ gleich sind und die oben angegebene Bedeutung haben,
$Q_1$ und $Q_2$ gleich sind und Reste der Formel

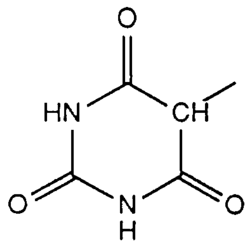 , 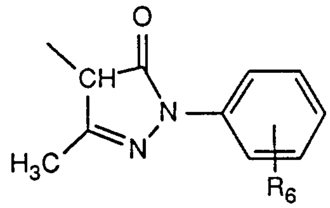 ,

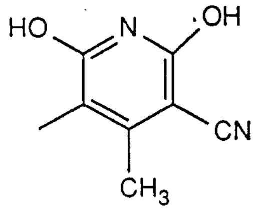 , 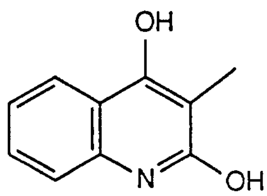 ,

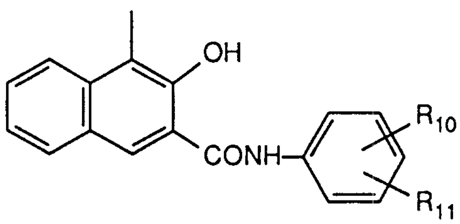 ,

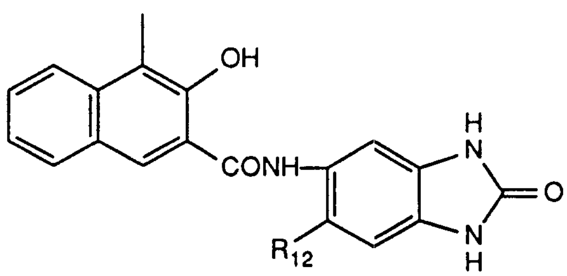 ,

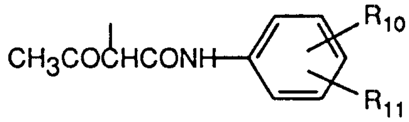

oder

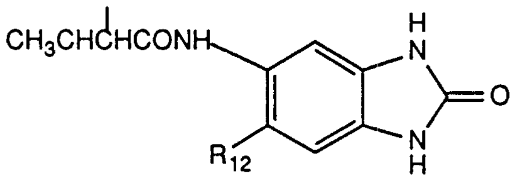

bedeuten,
worin $R_6$ Wasserstoff, $CH_3$ oder

$$SO_3^{\ominus} \frac{M_3^{n\oplus}}{n},$$

$R_{10}$ und $R_{11}$ unabhängig voneinander Wasserstoff, Chlor, $CH_3$, $OCH_3$, $NO_2$ oder

$$COO^{\ominus} \frac{M_3^{n\oplus}}{n}$$

und
$R_{12}$ Wasserstoff oder $CH_3$ sind, und
R, $M_1$, $M_2$ und n die oben angegebene Bedeutung haben.

Von ganz besonderem Interesse sind Verbindungen der Formel I worin
$X_1$ und $X_2$ gleich sind und -CH= bedeuten,
$Q_1$ und $Q_2$ gleich sind und Reste der Formel

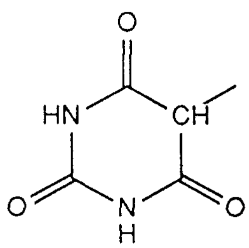 , 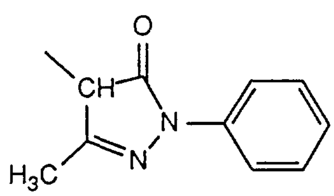 , 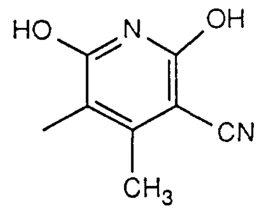 ,

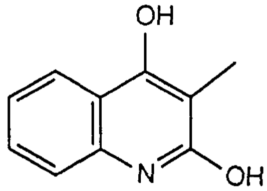 , 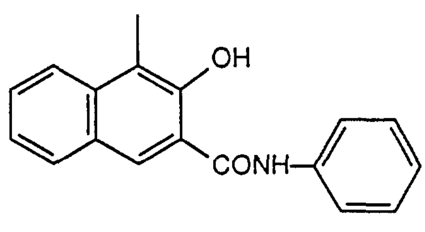

oder

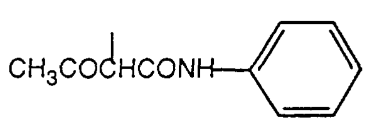

bedeuten.

Unter den Resten $Q_1$ und $Q_2$ ist derjenige der Formel

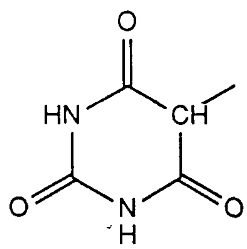

bevorzugt.

R ist bevorzugt eine Gruppe

$$SO_3^{\ominus} \frac{M_2^{n\oplus}}{n},$$

$M_1$, $M_2$ und gegebenenfalls $M_3$ sind vorzugsweise gleich und bevorzugt Ca.

Die Verbindungen der Formel I können durch Kondensation beziehungsweise durch Diazotierung und Kupplung gemäss allgemein bekannten Methoden, z.B. nach folgenden Schemata hergestellt werden:

a)

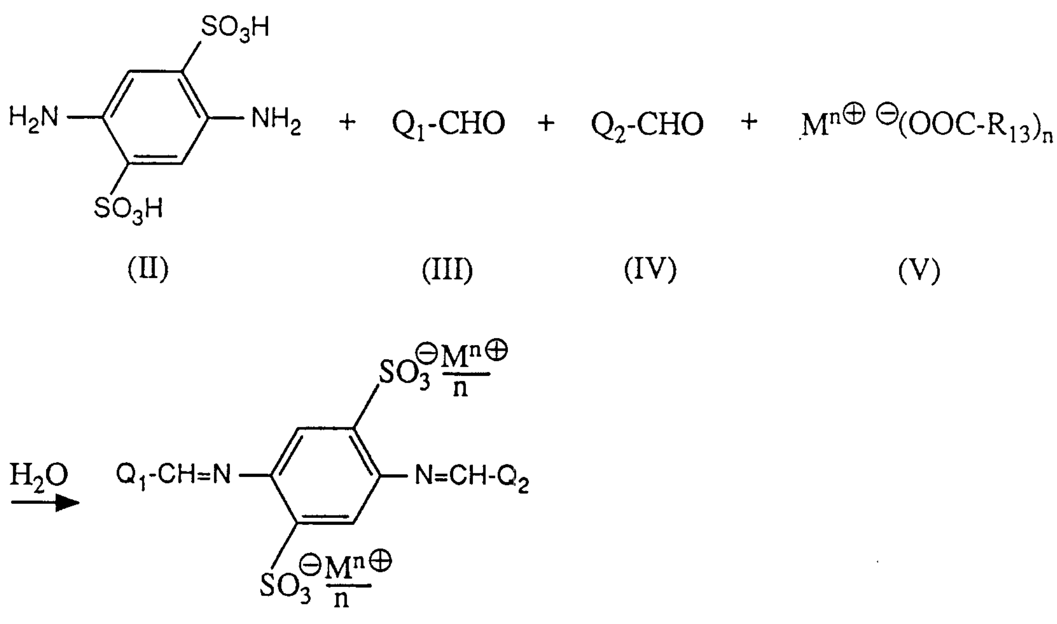


(II) (III) (IV) (V)

b)

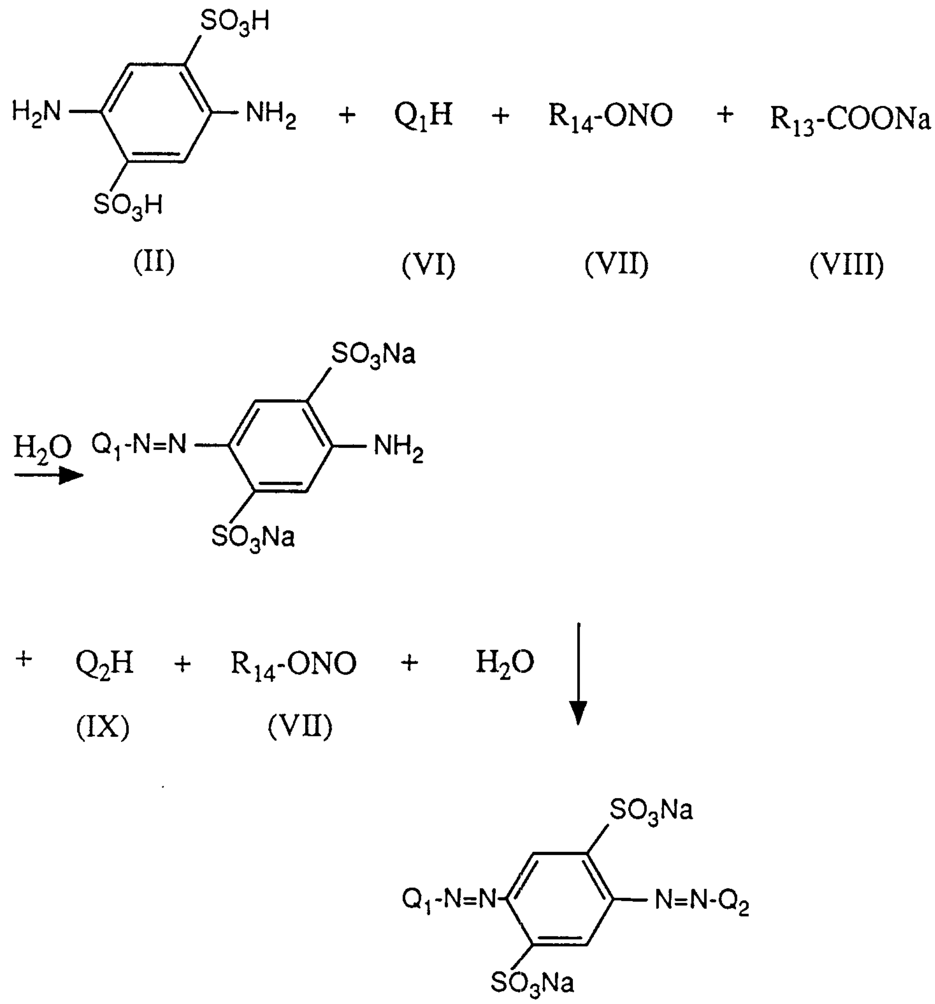


(II) (VI) (VII) (VIII)

(IX) (VII)

gegebenenfalls kann die erhaltene Verbindung durch Austausch von Na nach üblichen Methoden in das $M^{n\oplus}$-Salz umgewandelt werden.

c)

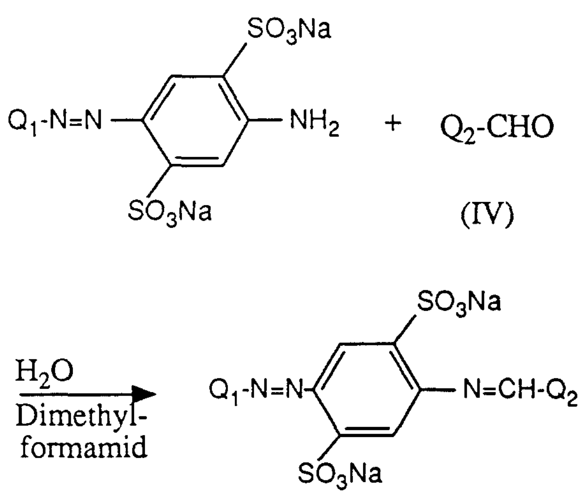


(IV)

gegebenenfalls kann die erhaltene Verbindung durch Austausch von Na nach üblichen Methoden in das $M^{n\oplus}$-Salz umgewandelt werden.

Die Verbindungen der Formel II bis IX sind bekannte Verbindungen. Sollten einige noch neu sein so können sie in Analogie zu den bekannten Verbindungen hergestellt werden. In den Formeln II bis IX haben $Q_1$ und $Q_2$ die oben angegebene Bedeutung, $M^{n\oplus}$ steht für $M_1^{n\oplus}$ und/oder $M_2^{n\oplus}$ mit der oben angegebenen Bedeutung und $R_{13}$ und $R_{14}$ bedeuten unabhängig voneinander $C_1$-$C_4$-Alkyl.

Die erfindungsgemässen Verbindungen eignen sich ausgezeichnet als Pigmente zum Färben von hochmolekularem organischem Material.

Hochmolekulare organische Materialien, die mit den erfindungsgemässen Verbindungen gefärbt bzw. pigmentiert werden können, sind z.B. Celluloseether und -ester, wie Ethylcellulose, Nitrocellulose, Celluloseacetat, Cellulosebutyrat, natürliche Harze oder Kunstharze, wie Polymerisationsharze oder Kondensationsharze, wie Aminoplaste, insbesondere Harnstoff- und Melamin-Formaldehydharze, Alkydharze, Phenoplaste, Polycarbonate, Polyolefine, Polystyrol, Polyvinylchlorid, Polyamide, Polyurethane, Polyester, ABS, Polyphenylenoxide, Gummi, Casein, Silikon und Silikonharze, einzeln oder in Mischungen.

Besonders geeignet sind die erfindungsgemässen Verbindungen zum Einfärben von Polyvinylchlorid und insbesondere von Polyolefinen, wie Polyethylen und Polypropylen.

Die erwähnten hochmolekularen organischen Verbindungen können einzeln oder in Gemischen als plastische Massen, Schmelzen oder in Form von Spinnlösungen, Lacken, Anstrichstoffen oder Druckfarben vorliegen. Je nach Verwendungszweck erweist es sich als vorteilhaft, die erfindungsgemässen Verbindungen als Toner oder in Form von Präparaten einzusetzen.

Bezogen auf das zu pigmentierende hochmolekulare organische Material kann man die erfindungsgemässen Verbindungen in einer Menge von 0,01 bis 30 Gew.%, vorzugsweise von 0,1 bis 10 Gew.%, einsetzen.

Die Pigmentierung der hochmolekularen organischen Substanzen mit den erfindungsgemässen Verbindungen erfolgt beispielsweise derart, dass man solche Verbindungen gegebenenfalls in Form von Masterbatches diesen Substraten unter Verwendung von Walzwerken, Misch- oder Mahlapparaten zumischt. Das pigmentierte Material wird hierauf nach an sich bekannten Verfahren, wie Kalandrieren, Pressen, Strangpressen, Streichen, Giessen oder Spritzgiessen, in die gewünschte endgültige Form gebracht. Oft ist es erwünscht, zur Herstellung von nicht starren Formlingen oder zur Verringerung ihrer Sprödigkeit den hochmolekularen Verbindungen vor der Verformung sogenannte Weichmacher einzuverleiben. Als solche können z.B. Ester der Phosphorsäure, Phthalsäure oder Sebacinsäure dienen. Die Weichmacher können vor oder nach der Einverleibung der erfindungsgemässen Verbindungen in die Polymeren eingearbeitet werden. Zwecks Erzielung verschiedener Farbtöne ist es ferner möglich, den hochmolekularen organischen Stoffen neben den erfindungsgemässen Verbindungen noch Füllstoffe bzw. andere farbgebende Bestandteile, wie Weiss-, Bunt- oder Schwarzpigmente, in beliebigen Mengen zuzufügen.

Zum Pigmentieren von Lacken, Anstrichstoffen und Druckfarben werden die hochmolekularen organischen Materialien und die erfindungsgemässen Verbindungen gegebenenfalls zusammen mit Zusatzstoffen, wie Füllmitteln, anderen Pigmenten, Siccativen oder Weichmachern, in einem gemeinsamen organischen Lösungsmittel oder Lösungsmittelgemisch fein dispergiert bzw. gelöst. Man kann dabei so verfahren, dass man die einzelnen Komponenten für sich oder auch mehrere gemeinsam dispergiert bzw. löst, und erst hierauf alle Komponenten zusammenbringt.

In Färbungen, beispielsweise von Polyvinylchlorid oder Polyolefinen, zeichnen sich die erfindungsgemässen Verbindungen durch gute allgemeine Pigmenteigenschaften, wie gute Dispergierbarkeit, hohe Farbstärke und Reinheit, gute Migrations-, Hitze- und Wetterbeständigkeit sowie gute Deckkraft, aber insbesondere durch hervorragende Lichtbeständigkeit aus.

Die nachfolgenden Beispiele erläutern die Erfindung.

Beispiel 1: 3,2 g Barbitursäueraldehyd, 2,7 g 1,4-Phenylendiamin-2,5-disulfonsäure und 1,8 g wasserfreies Calciumacetat werden in 150 ml Wasser auf 79°C erhitzt. Es bildet sich eine gelbe dicke Suspension, die noch 40 Minuten bie dieser Temperatur gerührt wird. Danach nutscht man das Produkt heiss ab, wäscht es mit 100 ml Wasser und trocknet es im Vakuum bei 60°C. Die Ausbeute beträgt 5,85 g (91,9 % der Theorie). Das Pigment entspricht der Formel

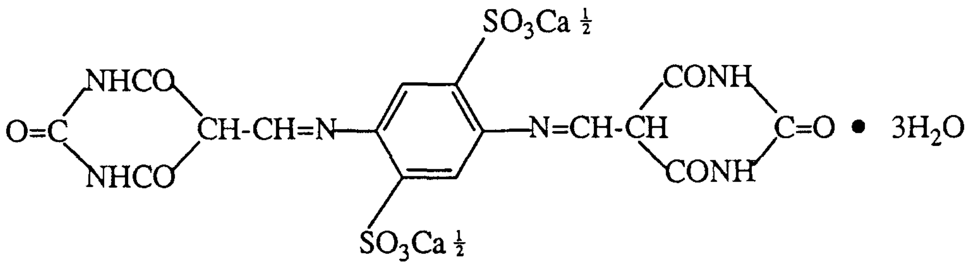

| Analyse: | | | | |
|---|---|---|---|---|
| | C | H | N | S |
| Berechnet | 30,19 % | 2,53 % | 13,20 % | 10,08 % |
| Gefunden | 30,60 % | 2,45 % | 13,35 % | 10,45 % |

Das Produkt dieses Beispiels färbt Polyvinylchlorid in grüngelben Tönen von ausgezeichneter Lichtbeständigkeit. Es migriert nicht. In Polypropylen eingearbeitet zeichnet sich das Produkt durch besondere Hitze- und Lichtbeständigkeit aus.

Tabelle 1 enthält weitere Pigmente, die nach dem Verfahren des obigen Beispiels 1 hergestellt werden können, indem man das Aldehyd der in Kolonne I aufgeführten Kupplungskomponenten mit den in Kolonne II angegebenen Diaminderivaten in Gegenwart der in Kolonne III aufgeführten Metallsalzen kondensiert. Kolonne IV gibt die Nuance des erhaltenen Pigments in Polyvinylchlorid an.

Tabelle 1:

| Bsp. | I | II | III | IV |
|---|---|---|---|---|
| 2 | Barbitursäure | 2,5-Diamino-benzolsulfonsäure | Calciumacetat | grüngelb |
| 3 | Barbitursäure | 1,4-Phenylendiamin-2,5-disulfonsäure | Ammoniumacetat | grüngelb |
| 4 | Barbitursäure | 1,4-Phenylendiamin-2,5-disulfonsäure | Natriumacetat | grüngelb |
| 5 | Barbitursäure | 1,4-Phenylendiamin-2,5-disulfonsäure | Kaliumacetat | grüngelb |
| 6 | Barbitursäure | 1,4-Phenylendiamin-2,5-disulfonsäure | Strontiumchlorid Hexahydrat | grüngelb |
| 7 | Barbitursäure | 1,4-Phenylendiamin-2,5-disulfonsäure | Bariumacetat | grüngelb |
| 8 | 1-Ethyl-6-hydroxy-3-cyan-4-methyl-2-pyridon | 1,4-Phenylendiamin-2,5-disulfonsäure | Calciumacetat | gelb |
| 9 | 2-Thiobarbitursäure | 1,4-Phenylendiamin-2,5-disulfonsäure | Calciumacetat | orange |
| 10 | 1-Methyl-4-hydroxy-2-chinolon | 1,4-Phenylendiamin-2,5-disulfonsäure | Calciumacetat | grüngelb |
| 11 | 1-Phenyl-3-methyl-5-pyrazolon | 1,4-Phenylendiamin-2,5-disulfonsäure | Calciumacetat | grüngelb |

<u>Beispiel 12:</u>

2,35 g Amin der Formel

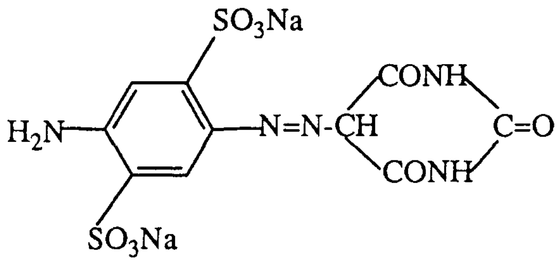

(X)

werden in 90 ml destilliertem Wasser und 10 ml Essigsäure während 5 Minuten verrührt. Zur dünnen roten Suspension gibt man 0,66 ml 90 %igem tert.-Butylnitrit und rührt 1 Stunde bei Raumtemperatur weiter. Nach ca. 15 Minuten entsteht eine klare braune Lösung. Danach fällt ein beiger Niederschlag (Diazoverbindung) aus. Inzwischen löst man 0,65 g Barbitursäure und 7.2 g Natriumhydoxid in 80 ml Wasser. Die klare hellgelbe Lösung giesst man innerhalb von 2 Minuten in die Diazosuspension. Die entstehende rote Suspension erhitzt man auf 80°C, rührt 30 Minuten bei dieser Temperatur, lässt auf 40°C abkühlen und nutscht ab. Das Nutschgut wäscht man mit 100 ml Ethanol und trocknet im Vakuum bei 60°C. Man erhält 2,7 g (91,5 % der Theorie) eines orangen Pulvers der Formel

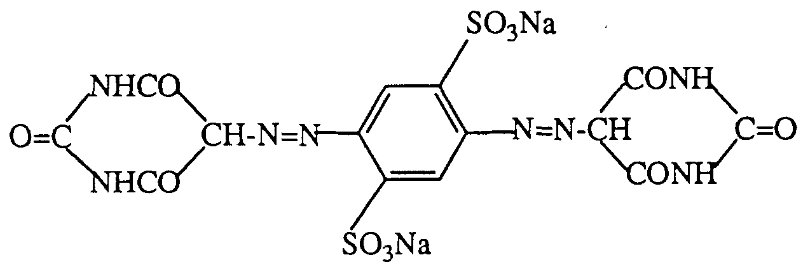

| Analyse: | | | | |
|---|---|---|---|---|
| | C | H | N | S |
| Berechnet | 26,84 % | 1,9 % | 17,89 % | 10,24 % |
| Gefunden | 26,38 % | 1,56 % | 17,35 % | 9,93 % |

Dieses Produkt färbt Polyethylen, Polypropylen und Polyvinylchlorid in farbstarken orangen Tönen und zeichnet sich durch hohe Hitze- und Lichtbeständigkeit aus. Das Ausgangsamin (X) kann wie folgt hergestellt werden:

17 g 1,4-Phenylendiamin-2,5-disulfonsäure 80 %ig werden in 500 ml entionisiertem Wasser während 5 Minuten verrührt. Man gibt zur grauen Suspension 13,25 ml 90 %igem tert.-Butylnitrit zu und rührt 1 Stunde bei Raumtemperatur weiter. Bereits nach 5 Minuten entsteht eine klare dunkelbraune Lösung. Zur Diazolösung gibt man dann nacheinander 13 g Barbitursäure und eine Lösung aus 40 g wasserfreiem Natriumacetat in 500 ml entionisiertem Wasser. Die Reaktionsmischung wird auf 74°C erhitzt. Man rührt die entstehende dunkelbraune Lösung 20 Minuten bei dieser Temperatur und versetzt sie mit 250 g Kochsalz. Es fällt ein roter Niederschlag aus. Man lässt die rote Suspension auf 45°C abkühlen und filtriert sie. Das aus roten Stäbchen bestehende Produkt wäscht man mit wenig Wasser sowie mit 100 ml Ethanol und trocknet es im Vakuum bei 60°C. Man erhält 20 g (85,25 % der Theorie) eines mohnroten Pulvers der Formel X.

| Analyse: | | | | |
|---|---|---|---|---|
| | C | H | N | S |
| Berechnet | 25,59 % | 1,94 % | 14,91 % | 13,66 % |
| Gefunden | 25,15 % | 1,85 % | 14,55 % | 13,15 % |

Tabelle 2 enthält weitere Pigmente, die nach dem Verfahren des obigen Beispiels 12 hergestellt werden können, indem man 1,4-Phenylendiamin-2,5-disulfonsäure in Wasser mit tert.-Butylnitrit diazotiert und die Diazoverbindung mit der in Kolonne I angegebenen Kupplungskomponente kuppelt. Das Azofarbstoffamin wird isoliert und ebenfalls in Wasser mit tert.-Butylnitrit diazotiert. Die neue Diazoverbindung wird schliesslich mit der in Kolonne II angegebenen Kupplungskomponente gekuppelt. Kolonne III charakterisiert die Nuance des neuen Disazopigments in Polyvinylchlorid. Die Produkte liegen in Form des Dinatriumsalzes vor.

Tabelle 2:

| Bsp. | I | II | III |
|---|---|---|---|
| 13 | 2,6-Dihydroxy-3-cyan-4-methyl-pyridin | 2,6-Dihydroxy-3-cyan-4-methyl-pyridin | violett |
| 14 | 5-Acetoacetylaminobenzimidazolon | 5-Acetoacetylaminobenzimidazolon | gelb |
| 15 | Barbitursäure | 2-Thiobarbitursäure | bordeaux |
| 16 | Barbitursäure | 2-Hydroxy-3-naphthoesäureanilid | braunviolett |
| 17 | Barbitursäure | 5-Acetoacetylaminobenzimidazolon | rot |
| 18 | Barbitursäure | 2,6-Dihydroxy-3-cyan-4-methyl-pyridin | bordeaux |
| 19 | 1-Phenyl-3-methyl-pyrazolon | 1-Phenyl-3-methyl-pyrazolon | scharlach |
| 20 | 5-Acetoacetylaminobenzimidazolon | 1-Phenyl-3-methyl-pyrazolon | rot |
| 21 | Barbitursäure | 2-Acetoacetylamino-toluol | orange |
| 22 | Barbitursäure | 2-Acetoacetylamino-anisol | orange |
| 23 | Barbitursäure | Acetessigsäureanilid | braunorange |
| 24 | Barbitursäure | 7-Acetoacetylamino-2-hydroxy-4-methyl-chinolin | rotorange |
| 25 | Barbitursäure | 4-Acetoacetylamino-acet-anilid | rotorange |
| 26 | Barbitursäure | 2-Acetoacetylamino-6-methoxy-benzthiazol | rotorange |
| 27 | Barbitursäure | 2-Hydroxy-3-naphthoesäure-(2-methoxy)-anilid | violett |
| 28 | Barbitursäure | 1-Acetoacetylamino-naphthalin | braunorange |
| 29 | Barbitursäure | 5-Methyl-6-(2-hydroxy-3-naphthoylamino)-benzimidazolon | blau |
| 30 | Barbitursäure | 1,3-Dimethylbarbitursäure | orange |
| 31 | Barbitursäure | 2-Cyaniminobarbitursäure | rotorange |
| 32 | Barbitursäure | 2-Iminobarbitursäure | rot |
| 33 | Barbitursäure | 1-(4-Methylphenyl)-3-methylpyrazolon | rotorange |
| 34 | Barbitursäure | 4-Iminobarbitursäure | braun |
| 35 | Barbitursäure | 2,4-Dihydroxy-6-methyl-pyridin | rot |
| 36 | Barbitursäure | 1-Ethyl-2,6-dihydroxy-3-cyan-4-methyl-pyridin | rotbraun |
| 37 | Barbitursäure | 2,6-Dihydroxy-4-methyl-pyridin-3-carbonsäureamid | braunrot |
| 38 | Barbitursäure | 1-Butyl-2,6-dihydroxy-3-cyan-4-methyl-pyridin | braunorange |
| 39 | Barbitursäure | 3-Methyl-pyrazolon | rot |
| 40 | Barbitursäure | 4-Hydroxy-cumarin | rotorange |
| 41 | 2-Iminobarbitursäure | 2-Iminobarbitursäure | rot |
| 42 | 2-Iminobarbitursäure | Acetessigsäureanilid | braunorange |
| 43 | 2-Iminobarbitursäure | 2,6-Dihydroxy-3-cyan-4-methyl-pyridin | violett |
| 44 | 2-Iminobarbitursäure | 2-Acetoacetylamino-6-methoxybenzthiazol | orange |
| 45 | 2-Iminobarbitursäure | 1-Phenyl-3-methyl-pyrazolon | orange |
| 46 | 2-Iminobarbitursäure | 2-Cyaniminobarbitursäure | orangerot |
| 47 | 2-Iminobarbitursäure | 2,4-Dihydroxy-5-methyl-pyridin | violettrot |
| 48 | 2-Iminobarbitursäure | 3-Methylpyrazolon | orangerot |
| 49 | 2-Acetoacetylamino-anisol | 2-Acetoacetylamino-6-methoxybenzthiazol | orange |
| 50 | 2-Acetoacetylamino-anisol | 1-Phenyl-4-methyl-pyrazolon | orange |
| 51 | 2-Acetoacetylamino-anisol | 2-Cyanimino-barbitursäure | orange |

Tabelle 2: (fortgesetzt)

| Bsp. | I | II | III |
|---|---|---|---|
| 52 | 2-Acetoacetylamino-6-methoxy-benzthiazol | 2-Acetoacetylamino-6-methoxybenzthiazol | orange |
| 53 | 5-Acetoacetylaminobenzimidazolon | 2-Cyaniminobarbitursäure | orangerot |
| 54 | 1-Phenyl-3-methylpyrazolon | 2-Cyaniminobarbitursäure | rotorange |
| 55 | 2-Cyaniminobarbitursäure | 2-Cyaniminobarbitursäure | orangerot |

Beispiel 56: 3,2 g Dinatriumsalz der Formel

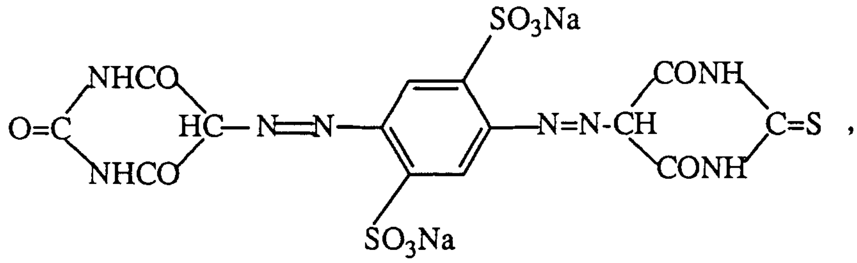

(Bsp. 15) und 1,1 g wasserfreies Calciumchlorid werden in 80 ml entionisiertem Wasser und 10 ml Alkohol auf 78°C erhitzt. Die dunkelrote Suspension wird eine Stunde bei dieser Temperatur gerührt und warm durch eine Nutsche filtriert. Das Nutschgut wird mit 50 ml Wasser gewaschen und im Vakuum bei 60°C getrocknet. Man erhält 1,2 g (89 % der Theorie) eines dunkelroten Pulvers der Formel

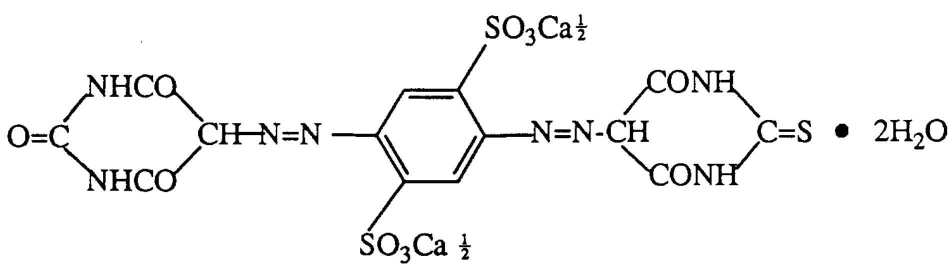

| Analyse: | | | | | |
|---|---|---|---|---|---|
| | C | H | N | S | Ca |
| Berechnet | 26,41 % | 1,90 % | 17,61 % | 15,10 % | 6,30 % |
| Gefunden | 26,0 % | 2,3 % | 17,12 % | 14,7 % | 5,9 % |

Dieses Produkt färbt Polyvinylchlorid in bordeaux Tönen von guter Migrations-, Lichtund Hitzebeständigkeit. Alle Dinatriumsalze können auf analoger Weise in die Calciumsalze überführt werden.

Beispiel 57: 2,35 g Amin der Formel X (vgl. Beispiel 2) wird in 100 ml destilliertem Wasser auf 50°C erhitzt. Es entsteht eine klare braunrote Lösung. Inzwischen löst man 0,95 g Barbitursäurealdehyd in 50 ml Dimethylformamid bei Raumtemperatur. Die klare gelbe Lösung giesst man unter Rühren in die Aminlösung. Es fällt ein oranger Niederschlag aus. Man rührt die orange Suspension 15 Minuten bei 60°C und dann 10 Minuten bei 80°C. Das Produkt wird bei 50°C abgenutscht, mit 100 ml Ethanol gewaschen und im Vakuum bei 60°C getrocknet. Man erhält 2,8 g (90,4 % der Theorie) eines orangen Pulvers der Formel

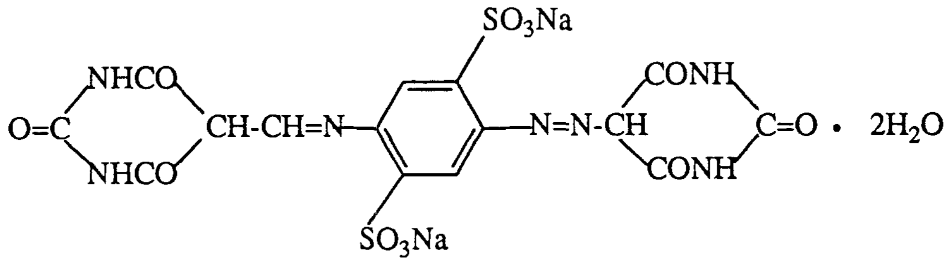

| Analyse: | | | | |
|---|---|---|---|---|
| | C | H | N | S |
| Berechnet | 28,81 % | 2,09 % | 15,68 % | 10,25 % |
| Gefunden | 28,74 % | 2,29 % | 15,63 % | 10,08 % |

Dieses Produkt färbt z.B. Polyvinylchlorid in orangen Tönen von ausgezeichneter Migrations-, Licht- und Hitzebeständigkeit.

Tabelle 3 enthält weitere Pigmente, die nach dem Verfahren des obigen Beispiel 57 hergestellt werden können, indem man das aus 1,4-Phenylendiamin-2,5-disulfonsäure und der Kupplungskomponente der Kolonne I erhaltene Azoamin in Wasser bei ca. 50°C löst und die entstehende Lösung mit dem Aldehyd der in Kolonne II aufgeführten Kupplungskomponente, gelöst in Dimethylformamid, reagieren lässt. Kolonne III gibt die Nuance des neuen Azinazopigments in Polyvinylchloridfolie an.

Tabelle 3:

| Bsp. | I | II | III |
|---|---|---|---|
| 58 | Barbitursäure | 1-Phenyl-3-methyl-5-pyrazolon | orange |
| 59 | Barbitursäure | 2,6-Dihydroxy-3-cyan-4-methyl-pyridin | orange |
| 60 | Barbitursäure | 2-Thiobarbitursäure | orange |
| 61 | Barbitursäure | 1-Methyl-2,6-dihydroxy-3-cyan-4-methyl-pyridin | orange |
| 62 | 1-Phenyl-3-methyl-5-pyrazolon | Barbitursäure | ocker |
| 63 | 1-Phenyl-3-methyl-5-pyrazolon | 2-Thiobarbitursäure | orange |
| 64 | 1-Phenyl-3-methyl-5-pyrazolon | 2,6-Dihydroxy-3-cyan-4-methyl-pyridin | orange |
| 65 | 1-Phenyl-3-methyl-5-pyrazolon | 1-Phenyl-3-methyl-5-pyrazolon | rotorange |
| 66 | 1-Phenyl-3-methyl-5-pyrazolon | 1-Methyl-2,6-dihydroxy-3-cyan-4-methyl-pyridin | gelb |
| 67 | 2-Imino-barbitursäure | Barbitursäure | orange |
| 68 | 2-Imino-barbitursäure | 2-Thiobarbitursäure | rotorange |
| 69 | 2-Methoxy-acetoacetylaminobenzol | Barbitursäure | gelb |
| 70 | 2-Acetoacetylamino-5-benzimidazolon | Barbitursäure | gelb |

**Patentansprüche**

1. Verbindungen der Formel

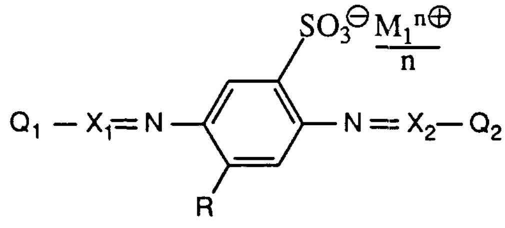

(I),

worin R Wasserstoff oder eine Gruppe

$$SO_3^{\ominus} \frac{M_2^{n\oplus}}{n}$$

bedeutet,
$M_1$ und $M_2$ unabhängig voneinander ein Alkali- oder Erdalkalimetall oder Aluminium oder eine Gruppe der Formel

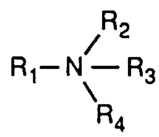

darstellen, wobei n die Zahl 1, 2 oder 3 ist und $R_1$, $R_2$, $R_3$ und $R_4$ Wasserstoff oder $C_1$-$C_8$-Alkyl bedeuten,
$X_1$ und $X_2$ unabhängig voneinander -N= oder -CH= sind,
$Q_1$ und $Q_2$ unabhängig voneinander Reste der Formel

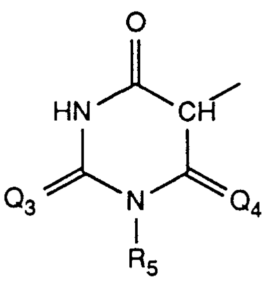 , 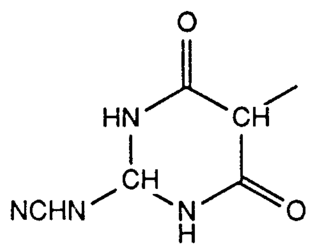 , 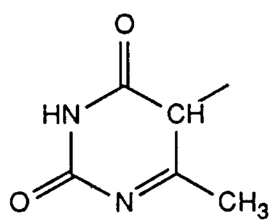 ,

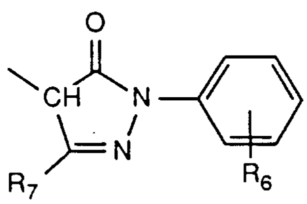 , 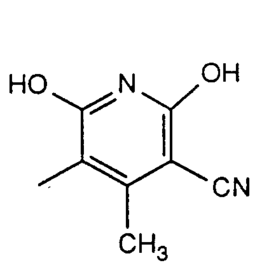 , 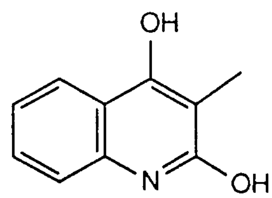 ,

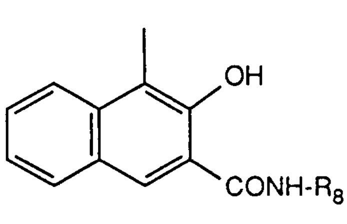 , 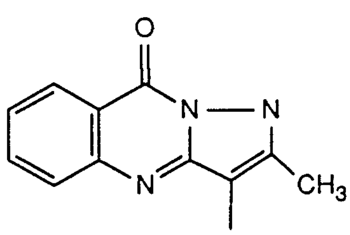

oder

$$CH_3COCHCONH\text{-}R_8$$

sind, worin $Q_3$ O, S oder NH und $Q_4$ O oder NH bedeuten, $R_5$ Wasserstoff, $C_1$-$C_{12}$-Alkyl, unsubstituiertes oder durch $C_1$-$C_4$-Alkyl substituiertes Phenyl, $R_6$ Wasserstoff, $C_1$-$C_4$-Alkyl, $C_1$-$C_4$-Alkoxy oder

$$SO_3^{\ominus}\,\frac{M_3^{n\oplus}}{n},$$

worin $M_3$ unabhängig von $M_1$ und $M_2$ die gleiche Bedeutung hat, $R_7$ OH, $C_1$-$C_4$-Alkyl oder $COOR_9$, worin $R_9$ $C_1$-$C_4$-Alkyl ist, und $R_8$ ein unsubstituiertes oder ein- oder zweimal durch Halogen, $C_1$-$C_4$-Alkyl, $C_1$-$C_4$-Alkoxy, $NO_2$ oder

$$COO^{\ominus}\,\frac{M_3^{n\oplus}}{n}$$

substituiertes Phenyl oder Naphthyl oder einen unsubstituierten oder durch $C_1$-$C_4$-Alkyl substituierten heterocyclischen Rest ausgewählt aus Pyrrolyl, Pyridyl, Pyrazinyl, Indolyl, Chinolyl, Benzimidazolyl, Benzoxazolyl, Phenmorpholyl, Chinazolyl oder Chinoxalyl bedeutet.

**2.** Verbindungen gemäss Anspruch 1 der Formel I, worin $X_1$ und $X_2$ gleich sind, $Q_1$ und $Q_2$ gleich sind und Reste der Formel

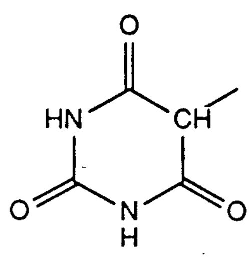
,
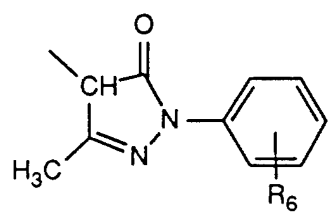
,

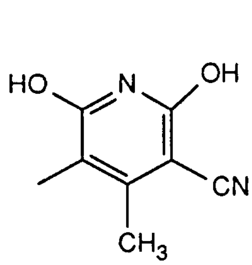
,
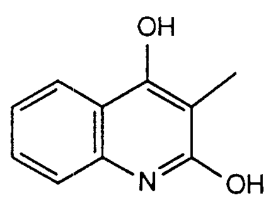
,

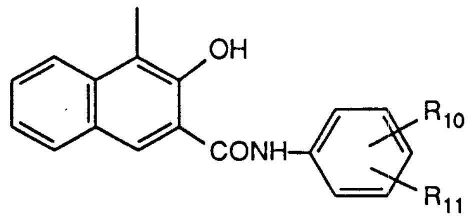
,

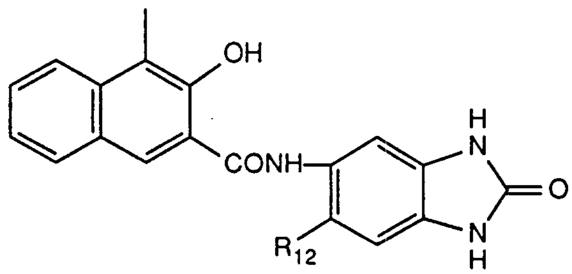
,

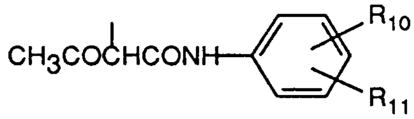

oder

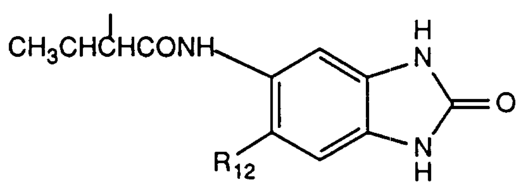

bedeuten,
worin $R_6$ Wasserstoff, $CH_3$ oder

$$SO_3^{\ominus} \frac{-}{n},$$

$R_{10}$ und $R_{11}$ unabhängig voneinander Wasserstoff, Chlor, $CH_3$, $OCH_3$, $NO_2$ oder

$$COO^{\ominus} \frac{M_3^{n\oplus}}{n}$$

und
$R_{12}$ Wasserstoff oder $CH_3$ sind.

**3.** Verbindungen gemäss Anspruch 1, der Formel I worin
$X_1$ und $X_2$ gleich sind und -CH= bedeuten,
$Q_1$ und $Q_2$ gleich sind und Reste der Formel

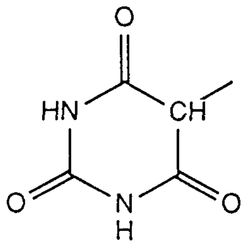 , 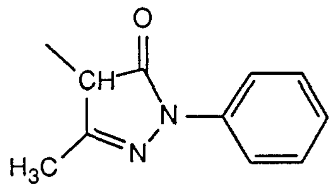 , 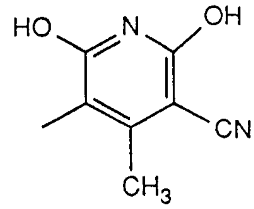 ,

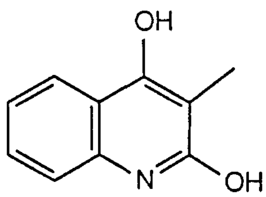 , 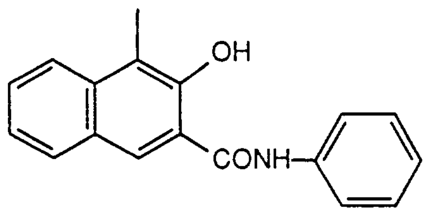

oder

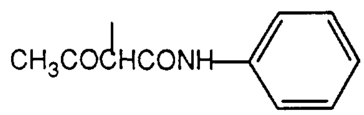

bedeuten.

**4.** Verbindungen gemäss Anspruch 3, **dadurch gekennzeichnet, dass** $Q_1$ und $Q_2$ den Rest der Formel

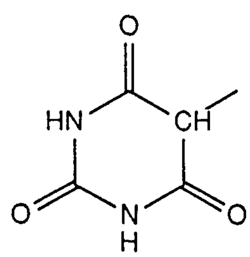

darstellen.

**5.** Verbindungen gemäss Anspruch 1 der Formel I, worin R eine Gruppe

$$SO_3^{\ominus} \frac{M_2^{n\oplus}}{n}$$

ist und $M_1$, $M_2$ und $M_3$ gleich sind.

**6.** Verbindungen gemäss Anspruch 5 **dadurch gekennzeichnet, dass** $M_1$, $M_2$ und $M_3$ Ca bedeuten.

**7.** Mit Verbindungen der Formel I gemäss Anspruch 1 pigmentiertes hochmolekulares organisches Material.

**8.** Hochmolekulares organisches Material gemäss Anspruch 7, **dadurch gekennzeichnet, dass** es sich um Polyolefine handelt.

**Claims**

**1.** A compound of formula

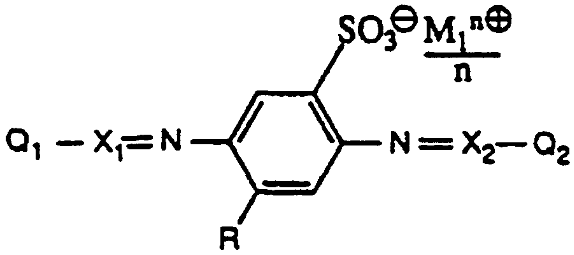

(I),

in which R is hydrogen or a group

$$SO_3^{\ominus}\frac{M_2^{n\oplus}}{n}$$

$M_1$ and $M_2$ are each independently of the other an alkali metal or alkaline earth metal or aluminium or a group of formula

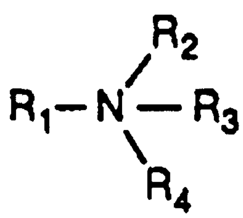

where n is 1, 2 or 3 and $R_1$, $R_2$, $R_3$ and $R_4$ are hydrogen or $C_1$-$C_8$alkyl,
$X_1$ and $X_2$ are each independently of the other -N= or-CH=,
$Q_1$ and $Q_2$ are each independently of the other radicals of formula

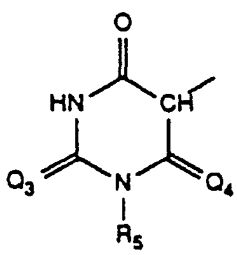

,

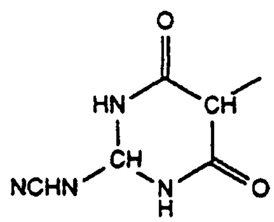

,

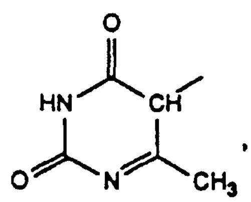

,

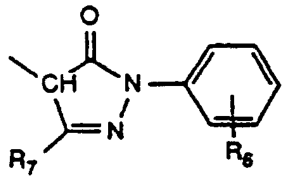,
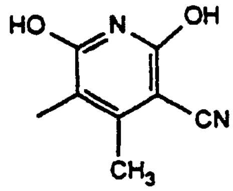,
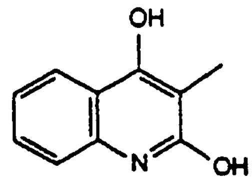,

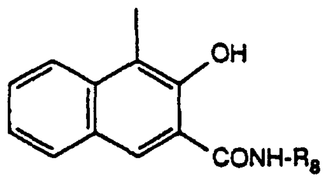,
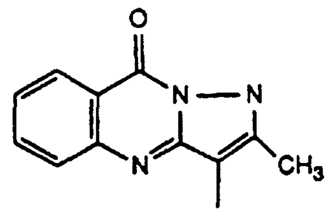

or

$$CH_3CO\overset{|}{C}HCONH\text{-}R_8\ ,$$

in which $Q_3$ is O, S or NH and $Q_4$ is O or NH, $R_5$ is hydrogen, $C_1$-$C_{12}$alkyl, unsubstituted or $C_1$-$C_4$alkyl-substituted phenyl, $R_6$ is hydrogen, $C_1$-$C_4$alkyl, $C_1$-$C_4$alkoxy or

$$SO_3^{\ominus}\frac{M_3^{n\oplus}}{n},$$

in which $M_3$ independently of $M_1$ and $M_2$ has the same meaning, $R_7$ is OH, $C_1$-$C_4$alkyl or $COOR_9$, in which $R_9$ is $C_1$-$C_4$alkyl, and $R_8$ is phenyl or naphthyl, unsubstituted or substituted by one or two members of the group consisting of halogen, $C_1$-$C_4$alkyl, $C_1$-$C_4$alkoxy, $NO_2$ and

$$COO^{\ominus}\frac{M_3^{n\oplus}}{n},$$

or is an unsubstituted or $C_1$-$C_4$alkyl-substituted heterocyclic radical selected from pyrrolyl, pyridyl, pyrazinyl, indolyl, quinolyl, benzimidazolyl, benzoxazolyl, phenmorpholyl, quinazolyl or quinoxalyl.

**2.** A compound according to claim 1 of formula I in which $X_1$ and $X_2$ are identical, $Q_1$ and $Q_2$ are identical and are radicals of formula

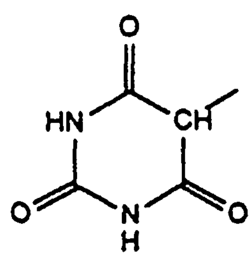,
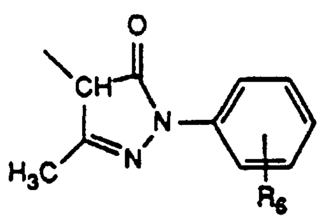,

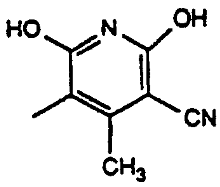,
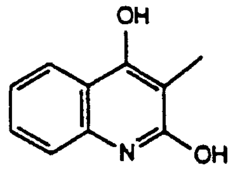,

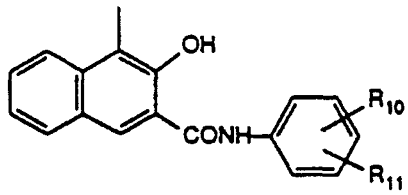,

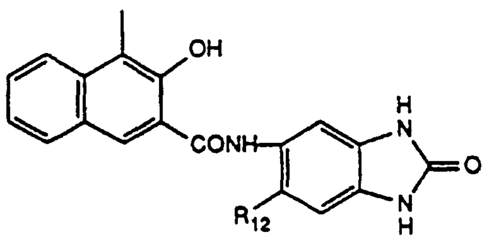,

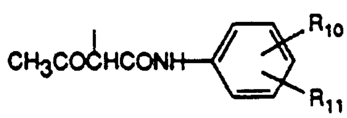

or

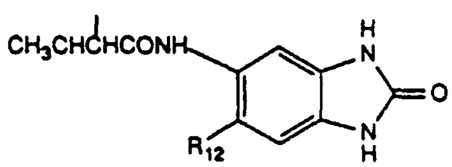

in which $R_6$ is hydrogen, $CH_3$ or

$$SO_3^{\ominus}\frac{M_3^{n\oplus}}{n},$$

$R_{10}$ and $R_{11}$ are each independently of the other hydrogen, chloro, $CH_3$, $OCH_3$, $NO_2$ or

$$COO^{\ominus}\frac{M_3^{n\oplus}}{n},$$

and
$R_{12}$ is hydrogen or $CH_3$.

**3.** A compound according to claim 1 of formula I in which $X_1$ and $X_2$ are identical and are -CH=, $Q_1$ and $Q_2$ are identical and are radicals of formula

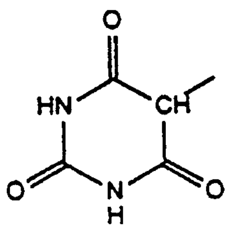
,
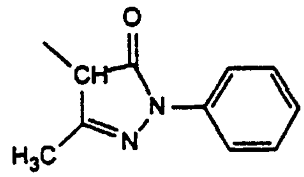
,
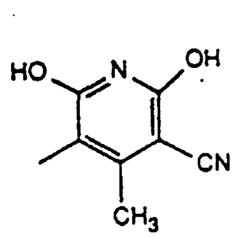
,

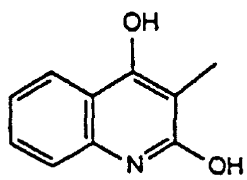
,
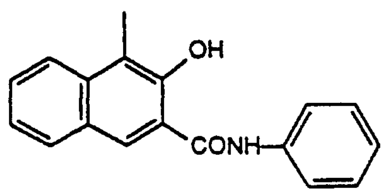

or

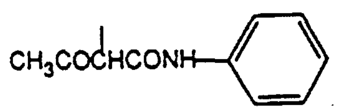

**4.** A compound according to claim 3, wherein $Q_1$ and $Q_2$ are the radical of formula

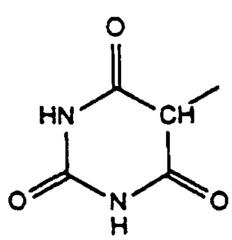
.

**5.** A compound according to claim 1 of formula I in which R is a group

$$SO_3^{\ominus}\,\frac{M_2^{n\oplus}}{n},$$

and $M_1$, $M_2$ and $M_3$ are identical.

**6.** A compound according to claim 5, wherein $M_1$, $M_2$ and $M_3$ are Ca.

7. Organic material of high molecular weight pigmented with a compound of formula I according to claim 1.

8. Organic material of high molecular weight according to claim 7, which is a polyolefin.

**Revendications**

1. Composés de formule

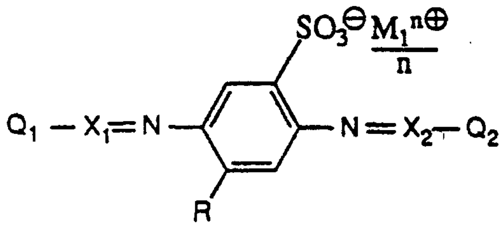

(I),

dans laquelle R représente un atome d'hydrogène ou un groupe

$$SO_3^{\ominus} \frac{M_2^{n\oplus}}{n}$$

$M_1$ et $M_2$ représentent indépendamment l'un de l'autre un métal alcalin ou alcalino-terreux ou l'aluminium ou un groupe de formule

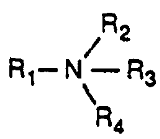

,

dans laquelle n est le nombre 1, 2 ou 3 et $R_1$, $R_2$, $R_3$ et $R_4$ représentent un atome d'hydrogène ou un groupe alkyle en $C_1$ à $C_8$,
$X_1$ et $X_2$ sont indépendamment l'un de l'autre -N= ou -CH=,
$Q_1$ et $Q_2$ sont indépendamment l'un de l'autre des groupes de formule

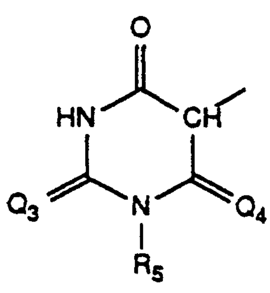

,

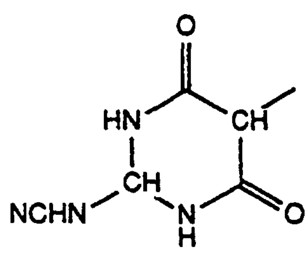

,

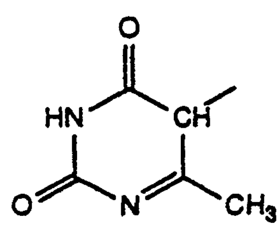

,

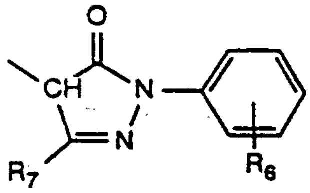, 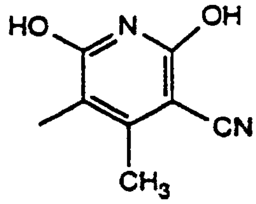, 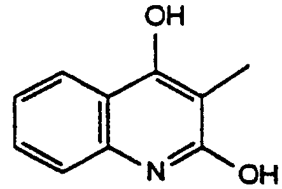,

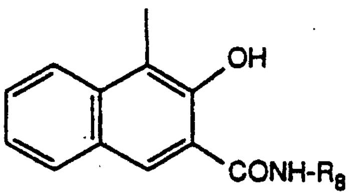, 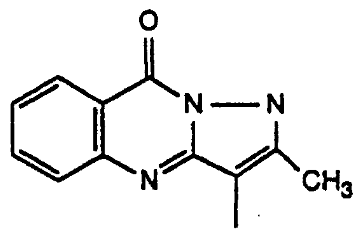

ou

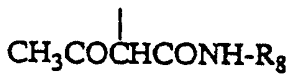,

dans lesquelles $Q_3$ représente O, S ou NH et $Q_4$ O ou NH, $R_5$ représente un atome d'hydrogène, un groupe alkyle en $C_1$ à $C_{12}$, phényle non substitué ou substitué par un groupe alkyle en $C_1$ à $C_4$, $R_6$ représente un atome d'hydrogène, un groupe alkyle en $C_1$ à $C_4$, alcoxy en $C_1$ à $C_4$ ou

$$SO_3^{\ominus} \frac{M_3^{n\oplus}}{n},$$

dans laquelle $M_3$ a indépendamment de $M_1$ et $M_2$ une signification identique, $R_7$ représente OH, un groupe alkyle en $C_1$ à $C_4$ ou $COOR_9$, dans laquelle $R_9$ est un groupe alkyle en $C_1$ à $C_4$, et $R_8$ représente un groupe phényle ou naphtyle non substitué ou substitué une ou deux fois par un atome d'halogène, un groupe alkyle en $C_1$ à $C_4$, alcoxy en $C_1$ à $C_4$, $NO_2$ ou

$$COO^{\ominus} \frac{M_3^{n\oplus}}{n}$$

ou un groupe hétérocyclique non substitué ou substitué par un groupe alkyle en $C_1$ à $C_4$, choisi parmi les radicaux pyrrolyle, pyridyle, pyrazinyle, indolyle, quinolyle, benzimidazolyle, benzoxazolyle, phénomorpholyle, quinazolyle et quinoxalyle.

**2.** Composés selon la revendication 1 de formule I, dans laquelle
$X_1$ et $X_2$ sont identiques,
$Q_1$ et $Q_2$ sont identiques et représentent des groupes de formule

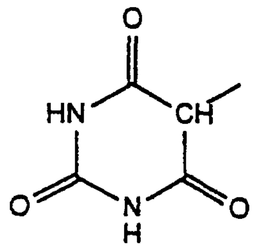 , 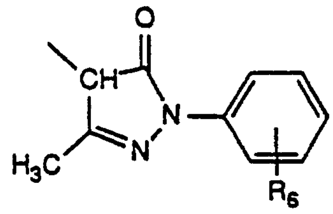 ,

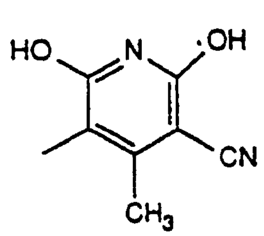 , 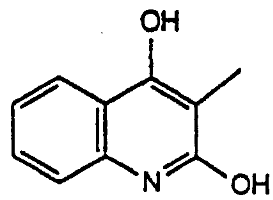 ,

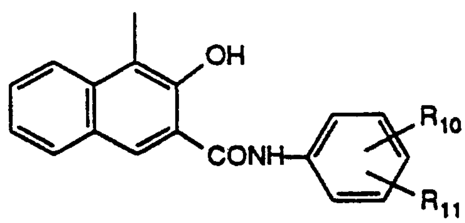 ,

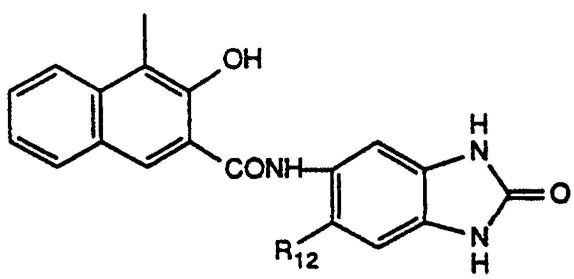 ,

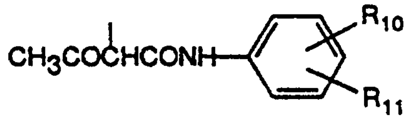

ou

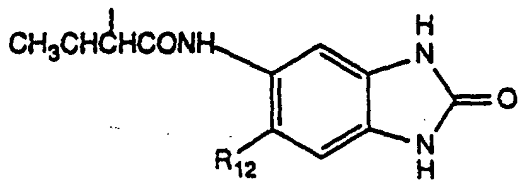

,

dans lesquelles $R_6$ représente un atome d'hydrogène, $CH_3$ ou

$$SO_3^{\ominus} \frac{M_3^{n\oplus}}{n}$$

$R_{10}$ et $R_{11}$ sont indépendamment l'un de l'autre un atome d'hydrogène, de chlore, $CH_3$, $OCH_3$, $NO_2$ ou

$$COO^{\ominus} \frac{M_3^{n\oplus}}{n}$$

et $R_{12}$ est un atome d'hydrogène ou $CH_3$.

**3.** Composés selon la revendication 1, de formule I dans laquelle
$X_1$ et $X_2$ sont identiques et représentent -CH=,
$Q_1$ et $Q_2$ sont identiques et représentent des groupes de formule

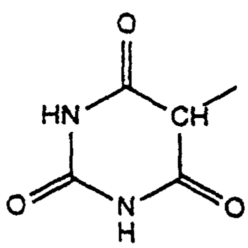

,

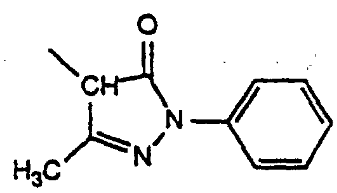

,

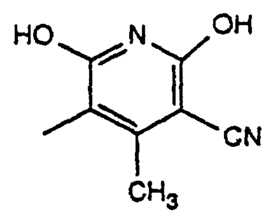

,

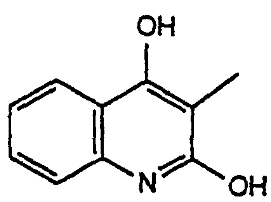

,

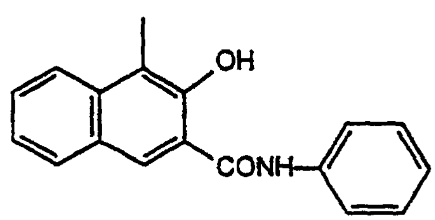

**ou**

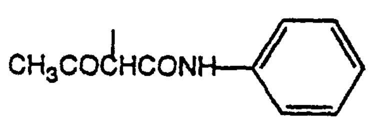

.

**4.** Composés selon la revendication 3, **caractérisés en ce que**, $Q_1$ et $Q_2$ représentent le groupe de formule

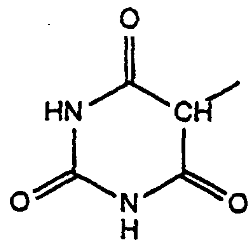

**5.** Composés selon la revendication 1 de formule I, **caractérisés en ce que**, R est un groupe

$$SO_3^{\ominus}\frac{M_3^{n\oplus}}{n}$$

et $M_1$, $M_2$ et $M_3$ sont identiques.

**6.** Composés selon la revendication 5, **caractérisés en ce que**, $M_1$, $M_2$ et $M_3$ représentent Ca.

**7.** Matériau organique de molécularité élevée pigmenté avec des composés de formule I selon la revendication 1.

**8.** Matériau organique de molécularité élevée selon la revendication 7, **caractérisé en ce qu'**il s'agit de polyoléfines.